# EUROPÄISCHE PATENTSCHRIFT

(11) **EP 1 518 749 B1**
(45) Veröffentlichungstag und Bekanntmachung des Hinweises auf die Patenterteilung: **18.06.2008**
(21) Anmeldenummer: 04019352.6
(22) Anmeldetag: 14.08.2004
(51) Int. Cl.: B60N 2/44

(54) **Vorrichtung zur Steuerung des Fluidvolumens in Formänderungselementen von Sitzen**
Device for controlling the fluid volume in shape adjustment elements of seats
Dispositif pour contrôler le volume de fluide lors du réglage de forme de sièges

(30) Priorität: 27.09.2003 DE 10344974
(43) Veröffentlichungstag der Anmeldung: 30.03.2005
(73) Patentinhaber: Alfmeier Präzision AG Baugruppen und Systemlösungen, 91757 Treuchtlingen (DE)
(72) Erfinder: Kern, Christoph, Dipl.-Ing., 71263 Weil der Stadt (DE); Buratowski, Thaddäus, 91799 Langenaltheim (DE); Köpfer, Markus, 91614 Mönchsroth (DE)
(74) Vertreter: Kratzsch, Volkhard

(56) Entgegenhaltungen:
- DE-A1- 3 142 833
- DE-A1- 10 063 478
- US-A- 4 000 685

## Beschreibung

Die Erfindung betrifft eine Vorrichtung zur Steuerung des Fluidvolumens in Formänderungselementen von Sitzen, insbesondere Fahrzeugsitzen, gemäß dem Oberbegriff des Anspruchs 1.

Solche Formänderungselemente in Sitzen, auch Sitzeinlagen genannt, dienen der Verbesserung des Sitzkomforts durch individuelle Anpassung der Sitzkonturen des Sitzes an den Sitzbenutzer und werden bei sog. Multikonturlehnen in Fahrzeugsitzen auch zur Massage des Sitzbenutzers herangezogen.

Bei einem bekannten Fahrzeugsitz (DE 100 63 478 A1 beinhaltet auch die Merkmale des Oberbegriffs des Anspruchs 1) werden mehrere als Luftkissen ausgeführte Formänderungselemente von einer Steuervorrichtung über ein pneumatisches Steuerglied zeitlich versetzt angesteuert und führen zur Massage einer den Sitz benutzenden Person einen Vorhub durch Befüllen mit Druckluft und einen Rückhub durch Entlüften aus. Die Befüllung und Entlüftung der Luftkissen erfolgt mittels elektromagnetischer Ventile, wobei die Luftkissen zu Kissengruppen zusammengefasst sind und in jeder von einer Druckluftquelle zu einer Kissengruppe führenden Druckluftleitung die Reihenschaltung eines 3/2-Wegemagnetventils und eines 2/2-Wegemagnetventils angeordnet ist. Üblicherweise werden die Ventile zu Ventilblöcken zusammengefasst montiert. Solche Ventilblöcke sind schwer und großvolumig und im Sitz selbst relativ schwierig zu integrieren.

Bei einer bekannten Vorrichtung dieser Art (DE 31 42 833 A1) weist das Schieberventil als Steuerschieber einen Drehschieber auf, der eine zentralen Druckraum enthält, dem das Medium von einem Druckmodulator ausgehend zugeführt wird. Dieser Drehschieber ist etwa topfförmig und enthält in der Seitenwandung einen radialen, nach außen hin offenen Kanal. In diesem Bereich sitzt auf der Außenfläche der Wandung des Drehschiebers ein Dichtring mit zentralem Durchgangskanal, der mit dem Kanal des Drehschiebers fluchtet. Der Drehschieber ist innerhalb eines etwa topfförmigen Gehäuses drehverstellbar. Das topfförmige Gehäuse weist in Umfangsrichtung beabstandete innere radiale Kanäle auf, die in Axialkanäle mit Anschlussöffnungen für Leitungen übergehen. Die inneren Kanäle befinden sich axial auf Höhe des einen radialen Kanals des Drehschiebers. Der Drehschieber kann in drei verschiedene Drehstellungen gedreht werden, wobei dann jeweils dessen Kanal über den Durchgangskanal im Dichtring mit einem inneren Kanal des Gehäuses in Verbindung gelangt, so dass im zentralen Druckraum befindliches Fluid über diese Kanalverbindung in die jeweilige Leitung zu dem jeweiligen Formänderungselement gelangen kann. Auch eine solche Vorrichtung, die mit einem Druckmodulator zu einer Baueinheit vereinigt ist, baut groß und schwer und benötigt viel Platz.

Der Erfindung liegt die Aufgabe zugrunde, eine Vorrichtung zur Steuerung des Fluidvolumens der eingangs genannten Art anzugeben, die bei gleicher Funktionalität ein kleineres Bauvolumen und Baugewicht aufweist.

Die Aufgabe ist erfindungsgemäß durch die Merkmale des Anspruchs 1 gelöst.

Die erfindungsgemäße Vorrichtung zur Steuerung des Fluidvolumens in Formänderungselementen von Sitzen hat den Vorteil, dass durch die Ausbildung des Steuerglieds als Schieberventil mit einem Steuerschieber in Form eines Axialschiebers, der mindestens eine mit Fluid beaufschlagbare Steueröffnung mit jeweils einer der Anschlussöffnungen in Fluidverbindung bringt, auf einfache Weise eine beliebige Ansteuerung der einzelnen Formänderungselemente realisiert werden kann. Das Schieberventil lässt sich bei gleichem Funktionsumfang kleiner und leichtgewichtiger ausführen und konstruktiv vorteilhaft in den Sitz integrieren. Das Schieberventil kann mit mehreren parallelen Steueröffnungen ausgeführt werden, wobei jeweils eine Steueröffnung einer bestimmten Anzahl von Anschlussöffnungen zugeordnet ist. Durch Vorsehen eines zusätzlichen Schaltventils ist es möglich, eine Mehrzahl von Formänderungselementen im Sitz gleichzeitig oder zeitlich nacheinander mit Fluid zu befüllen oder zu entleeren.

Vorteilhafte Ausführungsformen der erfindungsgemäßen Vorrichtung zur Steuerung des Fluidvolumens mit zweckmäßigen Weiterbildungen und Ausgestaltungen der Erfindung sind in den weiteren Ansprüchen angegeben.

Die Erfindung ist anhand eines in der Zeichnung dargestellten Ausführungsbeispieles im folgenden näher beschrieben. Es zeigen jeweils in schematischer Darstellung :
- Fig. 1: eine perspektivische Darstellung eines Fahrzeugsitzes mit einer Steuerungsvorrichtung für das Fluidvolumen in Formänderungselementen des Fahrzeugsitzes,
- Fig. 2: einen Schnitt längs der Linie II - II in Fig. 1 eines Schieberventils der Steuerungsvorrichtung.

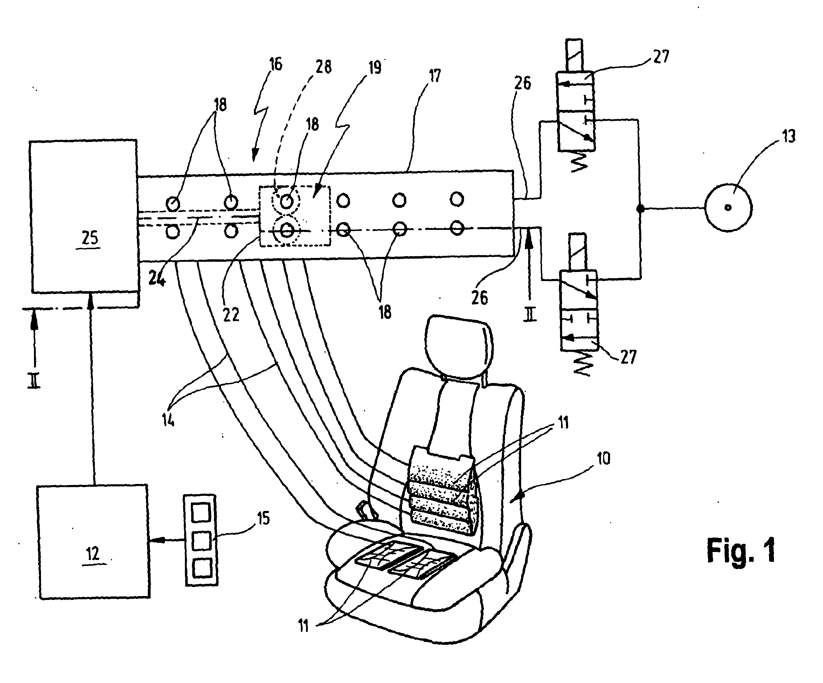

Bei dem in Fig. 1 gezeigten Fahrzeugsitz 10 sind beispielsweise in der Rückenlehne vier als Luftkissen ausgebildete Formänderungselemente 11 und in der Sitzfläche beispielsweise zwei ebenfalls als Luftkissen ausgebildete Formänderungselemente 11 integriert. Mittels einer in Fig. 1 schematisch dargestellten Steuerungsvorrichtung kann das Fluidvolumen in den Formänderungselementen 11, also die Luftfüllung der Luftkissen, modifiziert werden, um einerseits die Sitzkontur an die individuellen Wünsche des Sitzbenutzers anzupassen oder andererseits eine Massage des Sitzbenutzers durchzuführen. Unter Fluid wird hier jedes strömende Medium verstanden, also neben Luft oder anderen Gasen auch Flüssigkeiten. Üblicherweise wird aber bevorzugt Druckluft eingesetzt. Im Massagefall führen die Formänderungselemente 11, hier Luftkissen, in einem festgelegten, zeitlichen Ablauf durch Auffüllen (Aufblasen) einen Vorhub und durch Entleeren (Entlüften) einen Rückhub aus. Das Ablaufprogramm ist in einem Mikrocomputer 12 abgespeichert und kann über eine Tastatur 15 von dem Sitzbenutzer aufgerufen werden. Der Mikrocomputer 12 steuert ein Steuerglied an, das zwischen einer Fluiddruckquelle 13 und den Zuleitungen 14 zu den Formänderungselementen 11 angeordnet ist. Im Falle der Luftkissenausbildung der Formänderungselemente 11 ist die Fluiddruckquelle 13 eine Luftdruckquelle, z.B. ein Kompressor mit Druckluftspeicher, und das Steuerglied ein pneumatisches Steuerglied.

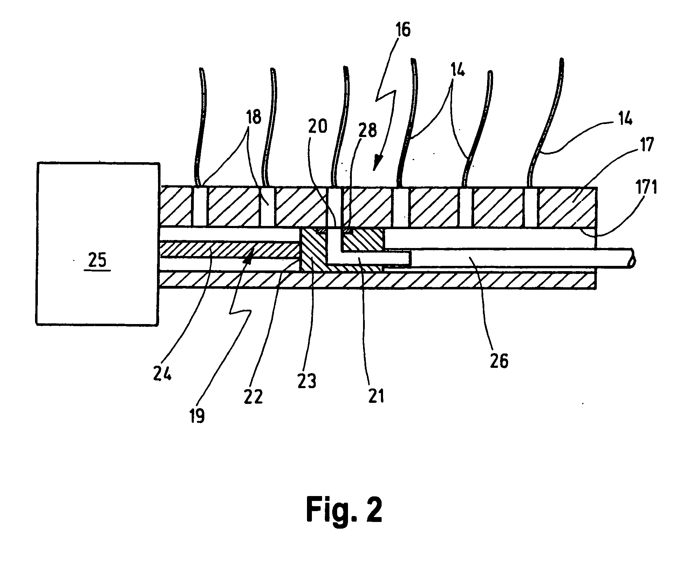

Das Steuerglied ist als Schieberventil 16 ausgebildet. Es umfasst ein Gehäuse 17 mit Anschlussöffnungen 18 für jeweils eine Zuleitung 14 zu einem der Formänderungselemente 11 und einen im Gehäuse 17 verstellbaren Steuerschieber 19. Der Steuerschieber 19 weist mindestens eine mit den Anschlussöffnungen 18 im Gehäuse 17 zusammenwirkende Steueröffnung 20 und mindestens einen in der Steueröffnung 20 mündenden Anschlusskanal 21 auf, der mit Fluid aus der Fluiddruckquelle 13 beaufschlagbar ist. Durch Verstellen des Steuerschiebers 19 kann die Steueröffnung 20 mit einer ausgewählten Anschlussöffnung 18 fluchtend ausgerichtet werden, so dass eine Verbindung zwischen der Fluiddruckquelle 13 und der zu einem Formänderungselement 11 führenden Zuleitung 14 hergestellt ist. Während der fluchtenden Ausrichtung der Steueröffnung 20 mit einer ausgewählten Anschlussöffnung 18 sind bei dem Ausführungsbeispiel gemäß Fig. 1 und 2 die übrigen Anschlussöffnungen 18 im Gehäuse 17 geöffnet, und damit die angeschlossenen Formänderungselemente 11 entleert, während bei einem weiteren Ausführungsbeispiel die übrigen Anschlussöffnungen 18 durch den Steuerschieber 19 fluiddicht abgeschlossen sind, so dass der Fluid- bzw. Luftdruck in den Formänderungselementen 11 gehalten wird.

Im Ausführungsbeispiel der Fig. 1 und 2 ist der Steuerschieber 19 als Axialschieber 22 ausgebildet. Er umfasst einen die Steueröffnung 20 und den Anschlusskanal 21 enthaltenden Schieberkopf 23 und eine mit dem Schieberkopf 23 starr verbundene Schieberstange 24. Die Schieberstange 24 ist mit einem motorischen Antrieb 25, z.B. einen linearen Schrittmotor, gekoppelt. Der in dem langgestreckten, rechteckförmigen Gehäuse 17 axial verschiebbare Schieberkopf 23 ist im Bereich der Steueröffnung 20 mittels einer diese umschließenden Ringdichtung 28 gegenüber der die Anschlussöffnungen 18 enthaltenden Gehäusewand 171 abgedichtet. Die Anschlussöffnungen 18 sind in Schieberichtung des Schieberkopfes 23 im Abstand hintereinander aufgereiht. Im Ausführungsbeispiel der Fig. 1 und 2 sind die Anschlussöffnungen 18 in zwei Gruppen mit gleicher Anzahl von Anschlussöffnungen 18 aufgeteilt. In jeder Gruppe sind die Anschlussöffnungen 18 in Schieberichtung des Schieberkopfes 23 hintereinander angeordnet, wobei die von den beiden Gruppen gebildeten zwei Reihen parallel zueinander ausgerichtet sind. Der Schieberkopf 23 weist zwei getrennte Steueröffnungen 20 mit Anschlusskanal 21 auf, von denen jeweils eine Steueröffnung 20 einer Reihe der Anschlussöffnungen 18 zugeordnet ist. Jeder Anschlusskanal 21 ist über eine separate Anschlussleitung 26 mit der Fluiddruckquelle 13 verbunden. In jeder Anschlussleitung 26 ist ein 3/2-Wegemagnetventil 27 angeordnet, über das der zugeordnete Anschlusskanal 21 mit der Fluiddruckquelle 13 verbunden oder an eine Entlastungsleitung angeschlossen, also entlüftet, werden kann. Die Anordnung der beiden Steueröffnungen 20 im Schieberkopf 23 und deren Zuordnung zu den beiden Reihen von Anschlussöffnungen 18 ist so getroffen, dass jeweils eine Anschlussöffnung 18 aus jeder Reihe gleichzeitig mit der zugeordneten Steueröffnung 20 fluchtet, während die übrigen Anschlussöffnungen 18 geöffnet und damit die an ihnen angeschlossenen Formänderungselemente 11 entleert sind. In der in Fig. 1 gezeigten Stellung der beiden 3/2-Wegemangetventile 27 sind beide Anschlusskanäle 21 entlastet. Werden beide 3/2-Wegemagnetventile 27 umgeschaltet, sind beide Steueröffnungen 20 gleichzeitig an die Fluiddruckquelle 13 angeschlossen. Durch wahlweises Umschalten des einen oder anderen 3/2-Wegemangetventils 27 können die beiden Steueröffnungen 20 zeitlich nacheinander an die Fluiddruckquelle 13 angeschlossen werden.

Wird nunmehr der motorische Antrieb 25 für den Axialschieber 22 nach einem bestimmten Programm von dem Mikrocomputer 12 angesteuert, so wird der Schieberkopf 23 mit den Steueröffnungen 20 in verschiedene Stellpositionen verfahren. In jeder Stellposition wird mindestens ein Formänderungselement 11 befüllt (belüftet), während ein zuvor befülltes Formänderungselement 11 durch Veränderung der Schieberkopfposition wieder entleert (entlüftet) wird. Werden die Formänderungselemente 11 in einer bestimmten Reihenfolge angesteuert, so führen diese einen Vorhub und anschließend einen Rückhub auf, was zu einer Massagewirkung beim Sitzbenutzer führt.

## Patentansprüche

1. Vorrichtung zur Steuerung des Fluidvolumens in Formänderungselementen (11) von Sitzen, insbesondere Fahrzeugsitzen (10), mit einem einerseits mit einer Fluiddruckquelle (13) und andererseits mit den Formänderungselementen (11) verbundenen, zum Auffüllen der Formänderungselemente (11) mit Fluid und Ablassen von Fluid aus den Formänderungselementen (11) dienenden Schieberventil (16), das ein Gehäuse (17) mit Anschlussöffnungen (18) für jeweils ein Formänderungselement (11) und einen im Gehäuse (17) relativ zu den Anschlussöffnungen (18) verstellbaren Steuerschieber (19) aufweist, der mindestens eine mit den Anschlussöffnungen (18) zusammenwirkende Steueröffnung (20) und mindestens einen in die Steueröffnung (20) mündenden, mit Fluid aus der Fluiddruckquelle (13) beaufschlagbaren Anschlusskanal (21) aufweist, **dadurch gekennzeichnet, dass** der Steuerschieber (19) ein im Gehäuse (17) geführter Axialschieber (22) ist, der einen die mindestens eine Steueröffnung (20) und den mindestens einen Anschlusskanal (21) enthaltenden, axial verschiebbaren Schieberkopf (23) und eine mit dem Schieberkopf (23) starr verbundene Schieberstange (24) zur Axialverschiebung des Schieberkopfes (23) aufweist, und dass die Anschlussöffnungen (18) in Schieberichtung des Schieberkopfes (23) in Abstand hintereinander aufgereiht sind.

2. Vorrichtung nach Anspruch 1, **dadurch gekennzeichnet, dass** die Anschlussöffnungen (18) in mindestens zwei Gruppen von in Verschieberichtung des Steuerschiebers (19) hintereinander angeordneten Anschlussöffnungen (18) aufgeteilt sind und dass der Steuerschieber (19) eine der Anzahl der Gruppen entsprechende Zahl von separaten Steueröffnungen (20) mit zugeordnetem Anschlusskanal (21) aufweist, von denen jeweils eine Steueröffnung (20) einer Gruppe von Anschlussöffnungen (18) zugeordnet ist.

3. Vorrichtung nach Anspruch 1 oder 2, **dadurch gekennzeichnet, dass** der Schieberkopf (23) zumindest im Bereich um die Steueröffnung (20) gegenüber der die Anschlussöffnungen (18) enthaltenen Gehäusewand (171) abgedichtet ist.

4. Vorrichtung nach einem der Ansprüche 1 bis 3, **dadurch gekennzeichnet, dass** die Schieberstange (24) mit einem vorzugsweise motorischen Antrieb (25) gekoppelt ist.

5. Vorrichtung nach Anspruch 4, **dadurch gekennzeichnet, dass** der Antrieb (25) als Schrittmotor ausgebildet ist.

6. Vorrichtung nach einem der Ansprüche 1 bis 5, **dadurch gekennzeichnet, dass** das Gehäuse (17) langgestreckt, vorzugsweise rechteckig, ist.

7. Vorrichtung nach einem der Ansprüche 1 bis 6, **dadurch gekennzeichnet, dass** der Anschlusskanal (21) über ein Schaltventil (27) mit der Fluiddruckquelle (13) verbunden ist.

8. Vorrichtung nach einem der Ansprüche 1 bis 7, **dadurch gekennzeichnet, dass** die Anschlussöffnungen (18) mit Anschlussstutzen zum Aufschieben von zu den Formänderungselementen (11) führenden Zuleitungen (14) versehen sind.

## Claims

1. Device for controlling the fluid volume in shape changing elements (11) of seats, in particular vehicle seats (10), having a sliding valve (16) connected on one side with a fluid pressure source (13) and on the other side with the shape changing elements (11) for filling the shape changing elements (11) with fluid and discharging fluid from the shape changing elements (11), said sliding valve having a housing (17) with connecting openings (18) for in each case one shape changing element (11) and a control slider (19) adjustable in said housing (17) relative to said connecting openings (18), said control slider having at least one control opening (20) cooperating with said connecting openings (18) and at least one connecting passage (21) which opens into said control opening (20) and is loadable with fluid from the fluid pressure source (13), **characterized in that** the control slider (19) is an axial slider (22) which is guided in said housing (17), said axial slider having an axially displaceable slider head (23) comprising at least one control opening (20) and said at least one connecting passage (21) and having a slider rod (24) rigidly connected with said slider head (23) for axial displacement of said slider head (23), and **in that** the connecting openings (18) in the sliding direction of said slider head (23) are arranged in a row at a distance one after the other.

2. Device according to Claim 1, **characterized in that** said connecting openings (18) are subdivided into at least two groups of connecting openings (18) arranged one after the other in the displacement direction of said control slider (19), and **in that** said control slider (19) has a number of separate control openings (20) with associated connecting passage (21) corresponding to the number of the groups, of which control openings in each case one control opening (20) is allocated to a group of connecting openings (18).

3. Device according to Claim 1 or 2, **characterized in that** said slider head (23) at least in the region around said control opening (20) is sealed from the housing wall (171) which contains said connecting openings (18).

4. Device according to any of Claims 1 to 3, **characterized in that** the slider rod (24) is coupled with a preferably motor drive (25).

5. Device according to Claim 4, **characterized in that** said drive (25) is formed as a stepping motor.

6. Device according to any of Claims 1 to 5, **characterized in that** said housing (17) is longitudinally extended, preferably rectangular.

7. Device according to any of Claims 1 to 6, **characterized in that** the connecting passage (21) is connected with the fluid pressure source (13) via a switching valve (27).

8. Device according to any one of Claims 1 to 7, **characterized in that** the connecting openings (18) are provided with connecting pieces for pushing on supply lines (14), leading to the shape changing elements (11).

## Revendications

1. Dispositif de contrôle du débit de fluide dans des éléments (11) de modification de forme de sièges et en particulier de sièges (10) de véhicule, qui présente d'une part une source (13) de fluide sous pression et d'autre part des vannes (16) à coulisseau reliées aux éléments (11) de modification de forme et qui servent à remplir de fluide les éléments (11) de modification de forme et à évacuer le fluide des éléments (11) de modification de forme, la vanne à coulisseau présentant un boîtier (17) doté d'ouvertures (18) de raccordement d'un élément respectif (11) de modification de forme et un coulisseau pilote (19) qui peut être déplacé dans le boîtier (17) par rapport aux ouvertures de raccordement (18) et dont au moins une ouverture pilote (20) coopère avec les ouvertures de raccordement (18) et au moins un canal de raccordement (21) débouche dans l'ouverture pilote (20) peut recevoir du fluide de la source (13) de fluide sous pression, **caractérisé en ce que** le coulisseau pilote (19) est un coulisseau axial (22) guidé dans le boîtier (17) et qui présente une tête de coulisseau (23) apte à coulisser axialement et qui contient la ou les ouvertures pilotes (20) et le ou les canaux de raccordement (21), et une tringle de coulisseau (24) reliée solidairement à la tête de coulisseau (23) et assurant le déplacement axial de la tête de coulisseau (23), et **en ce que** les ouvertures de raccordement (18) sont alignées les unes derrière les autres à distance mutuelle dans la direction de coulissement de la tête de coulisseau (23).

2. Dispositif selon la revendication 1, **caractérisé en ce que** les ouvertures de raccordement (18) sont réparties en au moins deux groupes d'ouvertures de raccordement (18) disposées les unes derrière les autres dans la direction de coulissement du coulisseau pilote (19) et **en ce que** le coulisseau pilote (19) présente un nombre d'ouvertures pilote (20) associées à un canal de raccordement (21) qui correspond au nombre des groupes, chacune de Ces ouvertures pilote (20) étant associée à un groupe d'ouvertures de raccordement (18).

3. Dispositif selon les revendications 1 ou 2, **caractérisé en ce qu'**au moins dans la zone qui entoure l'ouverture pilote (20), la tête de coulisseau (23) est rendue étanche par rapport à la paroi (171) du boîtier qui contient les ouvertures de raccordement (18).

4. Dispositif selon l'une des revendications 1 à 3, **caractérisé en ce que** la tige de coulisseau (24) est accouplée à un entraînement (25) de préférence à moteur.

5. Dispositif selon la revendication 4, **caractérisé en ce que** l'entraînement (25) est un moteur pas à pas.

6. Dispositif selon l'une des revendications 1 à 5, **caractérisé en ce que** le boîtier (17) est allongé et de préférence rectangulaire.

7. Dispositif selon l'une des revendications 1 à 6, **caractérisé en ce que** le canal de raccordement (21) est relié à la source (13) de fluide sous pression par une soupape de commutation (27).

8. Dispositif selon l'une des revendications 1 à 7, **caractérisé en ce que** les ouvertures de raccordement (18) sont dotées de tubulures de raccordement dans lesquelles des conduits (14) qui conduisent aux éléments (11) de modification de forme peuvent être enfichés.
